# EUROPÄISCHE PATENTANMELDUNG

(11) **EP 4 197 338 A2**
(43) Veröffentlichungstag der Anmeldung: **21.06.2023**
(21) Anmeldenummer: 22212161.8
(22) Anmeldetag: 08.12.2022
(51) Int. Cl.: A22C 11/08

(54) **FÜLLMASCHINE MIT SCHMIERSTOFF-VERSORGUNGSEINHEIT UND BETRIEBSVERFAHREN**

(30) Priorität: 17.12.2021 DE 102021133710
(71) Anmelder: VEMAG Maschinenbau GmbH, 27283 Verden/Aller (DE)
(72) Erfinder: Masemann, Florian, 27339 Riede (DE); Hemmje, Holger, 27283 Verden (DE); Rajes, Markus, 27330 Asendorf (DE)
(74) Vertreter: Eisenführ Speiser

(57) **Zusammenfassung**

Die Erfindung betrifft eine Füllmaschine (1) umfassend: ein Gehäuse (3); einen mit dem Gehäuse (3) verbundenen Trichter (5) mit einer wenigstens teilweise in dem Trichter (5) angeordneten Zubringerkurve (7) und einem Zubringerantrieb (9); und ein in dem Gehäuse (3) angeordnetes Förderwerk (11), welches im Betrieb fluidleitend mit dem Trichter (5) verbunden ist. Die Erfindung schlägt vor, dass die Füllmaschine ferner eine Schmierstoff-Versorgungseinheit (13) zur Schmierung des Zubringerantriebs (9) aufweist, welche dem Gehäuse (3) der Füllmaschine (1) und/oder dem Trichter (5) zugeordnet ist. Die Erfindung betrifft ferner ein Verfahren zum Betrieb einer solchen Füllmaschine (1). Die Erfindung betrifft weiterhin eine Füllmaschine (1) und ein Verfahren zum Betrieb einer Füllmaschine (1).

## Beschreibung

Die vorliegende Erfindung betrifft eine Füllmaschine umfassend ein Gehäuse, einen mit dem Gehäuse verbundenen Trichter zum Aufnehmen von pastöser Masse, insbesondere Lebensmittelprodukten, mit einer wenigstens teilweise in dem Trichter angeordneten Zubringerkurve und einem Zubringerantrieb zum Antreiben der Zubringerkurve, und ein in dem Gehäuse angeordnetes Förderwerk zum Fördern der pastösen Masse, wobei das Förderwerk im Betrieb fluidleitend mit dem Trichter verbunden ist.

Unter einer pastösen Masse wird im Sinne der Erfindung ein förderfähiges, insbesondere fließfähiges Medium verstanden, wie Lebensmittel-Massen verschiedener Art, beispielsweise Brätmasse, Teige, Käse, vegane oder vegetarische Lebensmittelmassen oder Kosmetika oder fließ- bzw. förderfähige chemische Substanzen und insbesondere Mischungen aus Flüssigkeiten mit Feststoffen jeglicher Art.

Füllmaschinen der vorstehenden Art sind allgemein bekannt. Solche Füllmaschinen haben gemein, dass eine pastöse Masse, wie beispielsweise Wurstbrät oder Teig, in einen Trichter eingefüllt wird und dort von einer Zubringerkurve in Richtung des Förderwerks gefördert wird. Die Zubringerkurve wird dabei von einem Zubringerantrieb angetrieben, welcher vorzugsweise in einem dem Trichter zugeordneten Gehäuseteil der Füllmaschine angeordnet ist. Von dem Trichter aus gelangt die pastöse Masse mittels der Zubringerkurve in ein Förderwerk, welches in dem Gehäuse der Füllmaschine angeordnet ist. Bei einem solchen Förderwerk kann es sich beispielsweise um eine Verdrängerpumpe handeln, wie eine Drehschieberpumpe, auch als eine Flügelzellen-Pumpe bezeichnet. Die jeweilige Pumpe fördert die pastöse Masse dann durch eine Förderkammer innerhalb des Gehäuses der Füllmaschine und gibt es an einen Auslass des Gehäuses, beispielsweise durch Füllrohre, wieder ab.

Zu Wartungs- und Reinigungszwecken muss dabei das Förderwerk und insbesondere die Förderkammer solcher Förderwerke zugänglich sein.

Der Zubringerantrieb muss im laufenden Betrieb mit Schmierstoff versorgt werden, um einen vorzeitigen Verschleiß zu vermeiden. Zu diesem Zweck werden vielfach externe Schmierstoff-Pumpen, wie beispielsweise Handhebelfettpressen mit sehr kurzen Schläuchen, mit einer korrespondierenden Öffnung im Gehäuse des Trichters bzw. einem Schmiernippel temporär verbunden. Dafür ist es teilweise erforderlich, den Betrieb der Füllmaschine zu unterbrechen. Nachteilig bei solchen externen Vorrichtungen zur Bereitstellung von Schmierstoff ist ferner, dass diese zusätzlichen Raum bzw. Stellflächen benötigen. Dies ist insbesondere bei räumlich begrenzten Produktionsanlagen von Nachteil und birgt durch herabhängende Schläuche oder Schmierstoffkanister ein erhöhtes Verletzungsrisiko für das Bedienpersonal. Weiterhin ist die von Benutzern vorgenommene externe Schmierstoffversorgung des Zubringerantriebs störanfällig aufgrund von Fehlbedienungen bzw. einem Verzicht auf eine regelmäßige Schmierung. Dadurch bedingt kann es zu Schäden oder dem vollständigen Versagen der Füllmaschine kommen. Zusätzlich kann es durch das externe Zuführen von Schmierstoff durch beispielsweise externe Schmierstoff-Pumpen, die oftmals für verschiedene Maschinen verwendet werden, zur Verunreinigung der Füllmaschine im Kontaktbereich mit der Schmierstoff-Pumpe sowie der Umgebung durch beispielsweise Tropfverluste beim Anschließen der Schmierstoff-Pumpe. Ferner können Fremdstoffe und insbesondere Verunreinigungen aus der Umgebung durch das wiederholte Anschließen und Abkoppeln der Schmierstoff-Pumpe in die Füllmaschine und insbesondere den Antrieb der Zubringerkurve eingebracht werden. Somit besteht auch aus Gründen der Hygiene und des Maschinenschutzes vor Verunreinigungen Verbesserungsbedarf.

Es ist daher die Aufgabe der vorliegenden Erfindung, zumindest einen der aus dem Stand der Technik bekannten Nachteile zu beheben. Insbesondere war Aufgabe der vorliegenden Erfindung, den Verschleiß einer Füllmaschine der vorstehenden Art zu reduzieren und gleichzeitig einen kompakten Aufbau der Füllmaschine zu ermöglichen.

Die vorliegende Erfindung löst diese Aufgabe in einem ersten Aspekt durch eine Füllmaschine nach Anspruch 1. Insbesondere schlägt die Erfindung vor, dass die Füllmaschine ferner eine Schmierstoff-Versorgungseinheit zur Schmierung des Zubringerantriebs aufweist, welche dem Gehäuse der Füllmaschine und/oder dem Trichter zugeordnet ist.

Im Sinne der Erfindung bedeutet die Zuordnung der Schmierstoff-Versorgungseinheit zu dem Gehäuse der Füllmaschine und/oder dem Trichter, dass die Schmierstoff-Versorgungseinheit ganz oder teilweise in das Gehäuse der Füllmaschine und/oder den Trichter integriert ist bzw. an dem Gehäuse der Füllmaschine und/oder dem Trichter unmittelbar oder mittelbar befestigt ist. Ferner kann die Schmierstoff-Versorgungseinheit auch ganz oder teilweise an dem Gehäuse der Füllmaschine und/oder dem Trichter mittelbar bzw. unmittelbar befestigt sein.

Durch die feste Zuordnung der Schmierstoff-Versorgungseinheit zu dem Gehäuse der Füllmaschine und/oder dem mit diesem Gehäuse verbundenen Trichter, wird der wiederholte Standortwechsel der Schmierstoff-Versorgungseinheit und die Verwendung der selbigen mit verschiedenen Maschinen vermieden. Somit werden Verunreinigungen aus der Umgebung oder von anderen Maschinen nicht länger durch eine mobile Schmierstoff-Versorgungseinheit in den Schmierkreislauf der Füllmaschine und insbesondere in dem Zubringerantrieb eingebracht. Ferner wird der Grad der Verunreinigungen am Gehäuse der Füllmaschine oder der Umgebung durch das wiederholte Anschließen einer mobilen Schmierstoff-Versorgungseinheit und damit einhergehende Tropfverluste vermieden.

Als Schmierstoff ist vorliegend jede Art von Schmiermittel zu verstehen, welches nicht auf bestimmte Aggregatszustände beschränkt ist. So kann es sich beispielsweise um Schmierfette oder Schmieröle handeln. Insbesondere ist darunter jedes Medium zu verstehen, welches Schmiereigenschaften aufweist, also dazu geeignet ist, den Verschließ der geschmierten Komponenten durch Oberflächenkontakt zu reduzieren.

Erfindungsgemäß wird somit eine Schmierstoff-Versorgungseinheit vorgeschlagen, welche sequenziell oder aber auch kontinuierlich im laufenden Betrieb bzw. während Produktionspausen die Schmierstoffversorgung des Zubringerantriebs sicherstellt. Durch die Zuordnung der Schmierstoff-Versorgungseinheit zu dem Gehäuse der Füllmaschine und/oder dem Trichter wird ein kompakter Aufbau der Füllmaschine ermöglicht. Insbesondere wird die Arbeitssicherheit im laufenden Betrieb erhöht, da keine externen Schmierstoff-Versorgungseinheiten teilweise oder vollständig in der näheren Umgebung der Füllmaschine platziert werden müssen, um diese bei Bedarf nutzen zu können. Weiterhin wird auch eine Fehlbedienung durch mangelnde Schmierung der Füllmaschine oder durch den Verzicht bzw. das Vergessen einer erforderlichen Schmierung verhindert. Sofern die Schmierstoff-Versorgungseinheit die Schmierung bevorzugt kontinuierlich bzw. sequenziell auch im laufenden Betrieb bereitstellt, können die Produktionszeiten erhöht werden, da Stillstandzeiten zu Wartungszwecken bzw. zur Schmierung des Zubringerantriebs reduziert bzw. vermieden werden können.

Vorzugsweise ist die Schmierstoff-Versorgungseinheit dem Gehäuse derart zugeordnet, dass die Schmierstoff-Versorgungseinheit mit dem Gehäuse einen geschlossenen Schmierstoffkreislauf ausbildet. Somit kann das Gehäuse insbesondere zumindest abschnittsweise Schmierstoffleitungen aufnehmen oder ausbilden und/oder Behälter für die Aufnahme oder Abgabe von Schmierstoff aufnehmen oder ausbilden. Somit gelangt in vorteilhafter Weise kein Schmierstoff in die Produktionsumgebung.

Gemäß einer ersten bevorzugten Ausführungsform weist das Gehäuse einen ersten Gehäuseteil, einen zweiten Gehäuseteil und ein Scharnier zum schwenkbaren Verbinden des ersten Gehäuseteils mit dem zweiten Gehäuseteil in einem geschlossenen Zustand auf. Ein Scharnier stellt dabei einen konstruktiv einfachen Mechanismus dar, welcher mit einer hohen Wiederholgenauigkeit das Öffnung und Schließen des ersten Gehäuseteils und des zweiten Gehäuseteils in vordefinierten Positionen relativ zueinander ermöglicht. Somit wird auf einfache Weise der Zugang zu dem Förderwerk für Wartungs- und Reinigungszwecke sichergestellt.

Vorzugsweise ist die Schmierstoff-Versorgungseinheit dem ersten Gehäuseteil und/oder dem zweiten Gehäuseteil zugeordnet. Dadurch, dass die Schmierstoff-Versorgungseinheit bevorzugt dem ersten Gehäuseteil und/oder dem zweiten Gehäuseteil zugeordnet ist, kann diese ferner auf einfache Weise in die Füllmaschine integriert bzw. an dieser mittelbar oder unmittelbar befestigt werden. Im Sinne der Erfindung ist der Trichter bevorzugt dem ersten Gehäuseteil zugeordnet und das Förderwerk dem zweiten Gehäuseteil zugeordnet. Somit kann die Schmierstoff-Versorgungseinheit entweder dem ersten Gehäuseteil mit dem Trichter oder dem zweiten Gehäuseteil mit dem Förderwerk oder alternativ auch beiden Gehäuseteilen zugeordnet sein. In Fällen, in denen die Schmierstoff-Versorgungseinheit beiden Gehäuseteilen zugeordnet ist, können Teile der Schmierstoff-Versorgungseinheit, wie beispielsweise Versorgungsleitungen, von dem ersten Gehäuseteil zu dem zweiten Gehäuseteil verlaufen oder umgekehrt. Ferner können auch andere Komponenten der Schmierstoff-Versorgungseinheit, wie beispielsweise Auffang- oder Abgabebehälter oder Schmierstoff-Dispenser wahlweise dem ersten Gehäuseteil oder dem zweiten Gehäuseteil zugeordnet sein, sodass die Schmierstoff-Versorgungseinheit insgesamt dem ersten Gehäuseteil und dem zweiten Gehäuseteil zugeordnet sein kann. Besonders bevorzugt ist die Schmierstoff-Versorgungseinheit dem zweiten Gehäuseteil zugeordnet, um insbesondere ein erhöhtes Gewicht im ersten, oberen Gehäuseteil zu vermeiden, welches bei einem zweiteiligen Gehäuse mit einem Scharnier regelmäßig gemeinsam mit dem Trichter zur Seite geschwenkt werden muss, um einen Zugang zu dem Förderwerk zu ermöglichen.

Vorzugsweise ist die Schmierstoff-Versorgungseinheit zumindest abschnittsweise in dem Gehäuse angeordnet. Durch die abschnittsweise Anordnung der Schmierstoff-Versorgungseinheit in dem Gehäuse wird die Füllmaschine insgesamt kompakter und das Verletzungsrisiko im Betrieb durch vorstehende Teile oder außerhalb des Gehäuses verlaufende Schläuche, minimiert. Besonders bevorzugt ist die Schmierstoff-Versorgungseinheit dabei vollständig in dem Gehäuse angeordnet. Somit wird die Hygiene noch weiter verbessert, da die Schmierstoff-Versorgungseinheit durch das Gehäuse ganz oder teilweise von der Umgebung getrennt wird. Ferner wird die Reinigung der Füllmaschine durch die zumindest teilweise Integration erleichtert.

Gemäß einer weiteren bevorzugten Ausführungsform umfasst die Füllmaschine ferner einen mit der Schmierstoff-Versorgungseinheit fluidleitend verbundenen Versorgungskanal, der sich vorzugsweise zumindest abschnittsweise durch das Gehäuse, insbesondere durch den ersten Gehäuseteil und/oder den zweiten Gehäuseteil erstreckt. Bevorzugt ist der Versorgungskanal dazu eingerichtet, Schmierstoff von der Schmierstoff-Versorgungseinheit zu dem Zubringerantrieb zu leiten. Durch die Bereitstellung eines Versorgungskanals kann die Schmierstoff-Versorgungseinheit im Wesentlichen an einer Position angeordnet sein, in welcher der benötigte Bauraum zur Verfügung steht und ggf. bei herkömmlichen Füllmaschinen sogar ungenutzt geblieben wäre. Der vorhandene Bauraum kann somit optimiert ausgenutzt werden durch eine bedarfsgerechte Anordnung der Schmierstoff-Versorgungseinheit. Von dieser Position ausgehend kann durch den Versorgungskanal dann der Schmierstoff bedarfsgerecht zu dem Zubringerantrieb und ggf. weiteren Komponenten gefördert werden. Durch die Leitung des Versorgungskanals zumindest abschnittsweise durch das Gehäuse wird die Hygiene noch weiter verbessert, da der Versorgungskanal durch das Gehäuse ganz oder teilweise von der Umgebung getrennt wird und so der Einfluss von Verunreinigungen aus der Umgebung weiter minimiert wird. Ferner wird die Reinigung der Füllmaschine durch die zumindest teilweise Integration erleichtert.

Bevorzugt umfasst die Füllmaschine ferner einen Schmierstoffbehälter zum Bereitstellen von Schmierstoff und vorzugsweise einen mit dem Schmierstoffbehälter fluidleitend verbundenen Schmierstoff-Dispenser zum Abgeben von Schmierstoff an den Versorgungskanal. Vorzugsweise sind der Schmierstoffbehälter und der Schmierstoff-Dispenser ebenfalls dem Gehäuse der Füllmaschine zugeordnet, also in diesem angeordnet bzw. mittelbar oder unmittelbar in diesem befestigt. Damit sind die wesentlichen Bestandteile einer bevorzugten Schmierstoff-Versorgungseinheit dem Gehäuse zugeordnet, sodass eine kompakte Füllmaschine bereitgestellt werden kann. Durch einen Schmierstoffbehälter wird im Betrieb ferner eine kontinuierliche Bereitstellung von Schmierstoff sichergestellt und durch den Schmierstoff-Dispenser, der bevorzugt steuerbar und weiter bevorzugt mit einer entsprechenden Steuerung verbunden ist, ein bedarfsgerechtes Abgeben des Schmierstoffes sichergestellt.

Weiter bevorzugt umfasst die Füllmaschine einen mit dem Zubringerantrieb fluidleitend verbundenen Abführkanal und vorzugsweise einen mit dem Abführkanal fluidleitend verbundenen Abführbehälter. Somit wird ein geschlossener Schmierstoff-Kreislauf bereitgestellt, welcher die Hygiene erhöht und das Einbringen von Verunreinigung in die Füllmaschine und insbesondere in den Zubringerantrieb beim Schmieren verhindert. Ferner kann der Schmierstoff aufgefangen werden und gelangt nicht in die Umgebung der Füllmaschine. Somit entfällt die Notwendigkeit, etwaige unkontrolliert in die Umgebung austretende Schmierstoffe gesondert zu beseitigen. Auf diese Weise wird der Betriebsablauf erleichtert und die Hygiene erhöht.

Vorzugsweise erstreckt sich der Abführkanal zumindest abschnittsweise durch das Gehäuse, insbesondere durch den ersten Gehäuseteil und ist dazu eingerichtet, Schmierstoff von dem Zubringerantrieb abzuführen und zu dem Auffangbehälter zu leiten. Somit kann verbrauchter oder überschüssiger Schmierstoff zuverlässig über den Abführkanal abgeleitet und zur Entsorgung in dem Auffangbehälter gesammelt werden. Der Auffangbehälter kann außerhalb des Gehäuses der Füllmaschine angeordnet sein, um die zu Umgänglichkeit zu erleichtern oder aber bevorzugt mit in das Gehäuse integriert sein, um eine kompaktere Füllmaschine bereitzustellen und die Arbeitssicherheit durch das Vermeiden von Gegenständen in der näheren Umgebung der Füllmaschine zu erhöhen.

Vorzugsweise ist der Auffangbehälter dem zweiten Gehäuseteil und weiter bevorzugt zumindest abschnittsweise in dem zweiten Gehäuseteil angeordnet. Durch die Zuordnung des Auffangbehälters zu dem zweiten Gehäuseteil, ist der Auffangbehälter dem unteren Teil der Füllmaschine zugeordnet. Dies erleichtert die Entnahme des Auffangbehälters insbesondere im gefüllten Zustand, und vermeidet das Risiko eines ungewollten Herabfallens des befüllten Auffangbehälters. Durch die zumindest abschnittsweise Anordnung des Auffangbehälters in dem zweiten Gehäuseteil ist ein kompakter Aufbau der Füllmaschine realisiert.

Gemäß einer weiteren bevorzugten Ausführungsform ist der Schmierstoff-Dispenser eine Schmierstoffpumpe zum Bereitstellen und Fördern von Schmierstoff durch den Versorgungskanal zu dem Zubringerantrieb. Vorzugsweise sind der Schmierstoffbehälter und die Schmierstoffpumpe zumindest abschnittsweise in dem zweiten Gehäuseteil angeordnet. Eine Schmierstoffpumpe stellt einen steuerbaren und zweckmäßigen Schmierstoff-Dispenser dar, welcher das bedarfsgerechte Bereitstellen von Schmierstoff ermöglicht. Durch die Anordnung der Schmierstoffpumpe und des Schmierstoffbehälters zumindest abschnittsweise in dem zweiten Gehäuseteil, wird ein kompakter Aufbau realisiert und insbesondere ein erhöhtes Gewicht im ersten, oberen Gehäuseteil vermieden, welches im Falle eines zweiteiligen Gehäuses mit einem Scharnier regelmäßig gemeinsam mit dem Trichter zur Seite geschwenkt werden muss, um einen Zugang zu dem Förderwerk zu ermöglichen.

Gemäß einer Weiterbildung der bevorzugten Ausführungsform, in welcher das Gehäuse einen ersten Gehäuseteil, einen zweiten Gehäuseteil und ein Scharnier zum schwenkbaren Verbinden des ersten Gehäuseteils und des zweiten Gehäuseteils in einem geschlossenen Zustand aufweist, und die Füllmaschine ferner einen mit der Schmierstoff-Versorgungseinheit fluidleitend verbundenen Versorgungskanal und einen mit dem Zubringerantrieb fluidleitend verbundenen Abführkanal aufweist, erstreckt sich der Versorgungskanal und/oder der Abführkanal zumindest abschnittsweise durch das Scharnier. Somit können weitere Komponenten der Schmierstoff-Versorgungseinheit, wie beispielsweise ein Schmierstoff-Behälter oder ein Auffangbehälter oder ein Schmierstoff-Dispenser im zweiten, in der Regel unteren Gehäuseteil angeordnet sein und der Schmierstoff über den Versorgungskanal, welcher die vorhandene Verbindung zwischen dem ersten und dem zweiten Gehäuseteil, nämlich das Scharnier, nutzt hin zu dem Zubringerantrieb geleitet werden. In entsprechender Weise kann der Schmierstoff von dem Zubringerantrieb dann auch über den Abführkanal unter Nutzung der vorhandenen Verbindung des ersten und zweiten Gehäuseteils über das Scharnier durch dieses abgeführt werden. Durch die Führung des Versorgungskanals und/oder des Abführkanals durch das Scharnier wird die einzige notwendige Verbindung zwischen dem ersten Gehäuseteil und dem zweiten Gehäuseteil genutzt, um eine Schmierstoffversorgung bereitzustellen. Somit kann auf weitere externe Schläuche oder Verbindungen zwischen dem ersten Gehäuseteil und dem zweiten Gehäuseteil zur Bereitstellung einer Schmierstoffversorgung verzichtet werden.

Vorzugsweise weist das Scharnier einen ersten Lagerklotz und einen zweiten Lagerklotz auf, wobei sich der Versorgungskanal zumindest abschnittsweise durch den ersten Lagerklotz erstreckt und/oder sich der Abführkanal zumindest abschnittsweise durch den zweiten Lagerklotz erstreckt. Die Lagerklötze, welche bevorzugt mit dem zweiten Gehäuseteil verbunden sind, bieten ausreichende Stabilität und den erforderlichen Raum zum Einbringen einer entsprechenden Bohrung, welche dann abschnittsweise den Versorgungskanal bzw. den Abführkanal ausbilden kann. Bevorzugt wird dabei der Versorgungskanal durch den ersten Lagerklotz geführt und der Abführkanal durch den zweiten Lagerklotz geführt, sodass der Versorgungskanal und der Abführkanal räumlich voneinander getrennt sind.

Weiter bevorzugt weist der erste Lagerklotz eine erste Bohrung auf und der zweite Gehäuseteil ein mit der ersten Bohrung korrespondierendes erstes Leitungselement, welches fluiddicht mit dem ersten Lagerklotz verbunden ist und wobei der Versorgungskanal durch die erste Bohrung und das erste Leitungselement definiert wird. Die Bereitstellung eines Leitungselementes zur Definition eines Abschnitts des Versorgungskanals stellt eine kosteneffiziente konstruktive Lösung dar, welche den Verzicht auf ein massives Gehäuse, in welchem ein Versorgungskanal beispielsweise durch spanabhebende Fertigungsverfahren eingebracht werden müsste, ermöglicht. Das Einbringen einer Bohrung in den ersten Lagerklotz stellt dabei eine zweckmäßige Lösung dar, um auch innerhalb des Lagerklotzes zumindest einen Abschnitt des Versorgungskanals zu definieren. Dadurch, dass das Leitungselement korrespondierend zu der Bohrung ausgebildet ist, kann eine fluidleitende Verbindung ohne Tropfverluste zwischen dem ersten Leitungselement und dem Lagerklotz ermöglicht werden.

Weiter bevorzugt weist der zweite Lagerklotz eine zweite Bohrung auf und der zweite Gehäuseteil ein mit der zweiten Bohrung korrespondierendes zweites Leitungselement, welches fluiddicht mit dem zweiten Lagerklotz verbunden ist und wobei der Abführkanal durch die zweite Bohrung und das zweite Leitungselement definiert wird. Die Bereitstellung eines Leitungselementes zur Definition eines Abschnitts des Abführkanals stellt eine kosteneffiziente konstruktive Lösung dar, welche den Verzicht auf ein massives Gehäuse, in welchem ein Abführkanal beispielsweise durch spanabhebende Fertigungsverfahren eingebracht werden müsste, ermöglicht. Das Einbringen einer Bohrung in den zweiten Lagerklotz stellt dabei eine zweckmäßige Lösung dar, um auch innerhalb des Lagerklotzes zumindest einen Abschnitt des Abführkanals zu definieren. Dadurch, dass das Leitungselement korrespondierend zu der Bohrung ausgebildet ist, kann eine fluidleitende Verbindung ohne Tropfverluste zwischen dem zweiten Leitungselement und dem Lagerklotz ermöglicht werden.

Gemäß einer weiteren bevorzugten Ausführungsform ist die Schmierstoff-Versorgungseinheit in dem ersten Gehäuseteil angeordnet und weist einen Schmierstoffbehälter und eine Energiequelle auf, wobei die Energiequelle insbesondere ein Energiespeicher ist, der dazu eingerichtet ist, eine Energie zum autarken Betrieb der Schmierstoff-Versorgungseinheit, insbesondere zum Fördern des Schmierstoffes von dem Schmierstoffbehälter durch den Versorgungskanal bereitzustellen. Somit wird die Energieversorgung und damit auch der Betrieb der Schmierstoff-Versorgungseinheit von der Energieversorgung und dem Betrieb der Füllmaschine entkoppelt. Dies ermöglicht insbesondere auch eine zuverlässige Schmierstoffversorgung während Stillstandzeiten der Füllmaschine. Insbesondere kann dabei auf eine Kabelführung zur Stromversorgung des zweiten, in der Regel unteren Gehäuseteils hin zu dem ersten Gehäuseteil vermieden werden. Dies ist insbesondere vorteilhaft, wenn der erste Gehäuseteil durch Verschwenken über das Scharnier relativ zu dem zweiten Gehäuseteil regelmäßig bewegt wird. Dies würde zu einer permanenten Belastung etwaiger elektrischer Leitungen führen, welche auf diese Weise vermieden werden kann.

Gemäß einer bevorzugten Weiterbildung ist die Schmierstoff-Versorgungseinheit eine austauschbare Schmierstoffkartusche und der Energiespeicher ein elektrochemischer Energiespeicher, vorzugsweise eine Batterie oder ein Akkumulator. Eine austauschbare Schmierstoffkartusche ermöglicht den Verzicht auf eine Schmierstoffpumpe und einen Schmierstoffbehälter und ermöglicht auf diese Weise eine kompakte Integration der Schmierstoff-Versorgungseinheit in den ersten Gehäuseteil.

Vorzugsweise ist der Energiespeicher ein chemischer Energiespeicher und dazu eingerichtet, mittels einer chemischen Reaktion einen Gasdruck zum Betreiben der Schmierstoffkartusche bereitzustellen. Somit werden ein kompakter Aufbau und der Verzicht auf eine externe Stromversorgung ermöglicht. Somit ist die Schmierstoff-Versorgungseinheit in einfacher Weise in den ersten Gehäuseteil integrierbar und kann gemeinsam mit dem Trichter über das Scharnier verschwenkt werden.

Vorzugsweise weist der zweite Gehäuseteil ein Aufnahmefach und/oder einen Aufnahmebehälter zur Aufnahme des Schmierstoffbehälters auf, welches eine Zugangsöffnung zur Entnahme des Schmierstoffbehälters aufweist und/oder relativ zu dem zweiten Gehäuseteil zur Entnahme des Schmierstoffbehälters bewegbar ist.

Somit ist der Schmierstoffbehälter zur Entnahme auf einfache Weise zugänglich, ohne das zweite Gehäuseteil vollständig öffnen zu müssen. Insbesondere ein Aufnahmefach, welches relativ zu dem zweiten Gehäuseteil bewegbar ist und somit eine Schublade darstellt, ermöglicht das einfache Öffnen und Schließen des Gehäuses und verhindert das Eindringen von Schmutz zuverlässig.

Bevorzugt ist der Aufnahmebehälter ein Aufnahmebeutel.

Vorzugsweise weist der zweite Gehäuseteil ein Aufnahmefach zur Aufnahme des Auffangbehälters auf, welches eine Zugangsöffnung zur Entnahme des Auffangbehälters aufweist und/oder relativ zu dem zweiten Gehäuseteil zur Entnahme des Auffangbehälters bewegbar ist. Somit ist der Auffangbehälter zur Entnahme auf einfache Weise zugänglich, ohne das zweite Gehäuseteil vollständig öffnen zu müssen. Insbesondere ein Aufnahmefach, welches relativ zu dem zweiten Gehäuseteil bewegbar ist und somit eine Schublade darstellt, ermöglicht das einfache Öffnen und Schließen des Gehäuses und verhindert das Eindringen von Schmutz zuverlässig.

Vorzugsweise ist die Schmierstoff-Versorgungseinheit fluidleitend mit dem Scharnier verbunden und ferner zur Schmierung des Scharniers eingerichtet. Somit wird der Schmierstoff nicht lediglich durch das Scharnier hindurchgeführt, sondern das Scharnier selbst auch über die Schmierstoff-Versorgungseinheit mit Schmierstoff versorgt und so der Verschleiß des Scharniers reduziert.

Gemäß einer weiteren bevorzugten Ausführungsform weist die Füllmaschine eine Sensoreinrichtung zum Detektieren von Schmierstoff in mindestens einem Bereich auf, welcher einem der folgenden zugeordnet ist: Zubringerantrieb, Förderwerk, Versorgungskanal, Abführkanal, Scharnier, Auffangbehälter oder Lagerklotz. Somit ist die Sensoreinrichtung zum Detektieren von Schmierstoff mindestens in einem dem Zubringerantrieb zugeordneten Bereich, einem dem Förderwerk zugeordneten Bereich, einem dem Versorgungskanal zugeordneten Bereich, einem dem Abführkanal zugeordneten Bereich, einem dem Scharnier zugeordneten Bereich oder einem dem Lagerklotz zugeordneten Bereich bzw. in einem Bereich, welcher einen oder mehrere dieser Bereiche umfasst, eingerichtet. Somit kann die Schmierstoffversorgung an geeigneter Stelle überwacht werden und ein zuverlässiger Betrieb der Schmierstoff-Versorgungseinheit sichergestellt werden.

Weiter bevorzugt umfasst die Füllmaschine ferner eine Steuerung, die mit der Schmierstoff-Versorgungseinheit und/oder der Sensoreinrichtung signalleitend verbunden ist. Somit kann die Schmierstoff-Versorgungseinheit durch die Steuerung gesteuert werden, beispielsweise entsprechend einer durch eine Benutzerschnittstelle der Füllmaschine erfolgte Eingabe, insbesondere kontinuierlich auf Basis dieser Eingabe und/oder veränderten Eingaben, und/oder basierend auf den von der Sensoreinheit bereitgestellten Signalen bezüglich der Schmierstoffversorgung in einem oder mehreren der vorstehend genannten Bereiche. Vorzugsweise umfasst die Eingabe Betriebsparameter und/oder Produktparameter und/oder Prozessparameter.

Die Erfindung wurde vorstehend in einem ersten Aspekt in Bezug auf eine Füllmaschine beschrieben. Die Erfindung löst die eingangs genannte Aufgabe in einem zweiten Aspekt eine Füllmaschine der eingangs bezeichneten Art, ferner umfassend eine Schnittstelle zur fluidleitenden Verbindung mit einer externen Schmierstoff-Versorgungseinheit zur Schmierung des Zubringerantriebs. Die Erfindung löst die zugrundeliegende Aufgabe in einem zweiten Aspekt dadurch, dass die Füllmaschine ferner einen mit dem Zubringerantrieb fluidleitend verbundenen Abführkanal zum Abführen von Schmierstoff von dem Zubringerantrieb und einen mit dem Abführkanal fluidleitend verbundenen Auffangbehälter zum Auffangen des Schmierstoffs umfasst, wobei der Auffangbehälter zumindest abschnittweise in dem Gehäuse, insbesondere dem zweiten Gehäuseteil angeordnet ist. Durch die zumindest abschnittweise Anordnung des Auffangbehälters in dem Gehäuse wird eine geschlossene Abführung des Schmierstoffes mittels des Abführkanals durch das Gehäuse sichergestellt und ferner kann der Schmierstoff aufgefangen werden und gelangt nicht in die Umgebung der Füllmaschine. Diese unkontrolliert austretenden Schmierstoffe müssten ansonsten regelmäßig beseitigt werden. Auf diese Weise wird der Betriebsablauf erleichtert und die Hygiene erhöht. Durch die Vermeidung von unkontrolliert an die Umgebung der Füllmaschine und insbesondere den Boden abgegebenen Schmierstoffes wird ferner die Arbeitssicherheit erhöht und Stürze vermieden.

Die Erfindung wurde vorstehend in einem ersten Aspekt in Bezug auf eine Füllmaschine beschrieben. Die Erfindung löst die eingangs genannte Aufgabe in einem dritten Aspekt durch ein Verfahren zum Betrieb einer Füllmaschine, welche vorzugsweise gemäß einer der zuvor beschriebenen Ausführungsformen ausgebildet ist. Das Verfahren umfasst die Schritte: Betätigen einer dem Gehäuse zugeordneten Schmierstoff-Versorgungseinheit, und Betreiben der Füllmaschine unter gleichzeitiger Schmierung des in dem Gehäuse angeordneten Zubringerantriebs durch die Schmierstoff-Versorgungseinheit.

Durch die Bereitstellung einer Füllmaschine gemäß dem ersten bzw. zweiten Aspekt der Erfindung macht sich das Verfahren gemäß dem dritten Aspekt der Erfindung die vorstehend beschriebenen Vorteile in Bezug auf die Füllmaschine zu eigen. Bevorzugte Ausführungsbeispiele der Füllmaschine und Vorteile sind somit ebenso bevorzugte Ausführungsbeispiele und Vorteile des Verfahrens gemäß dem dritten Aspekt der Erfindung und umgekehrt.

Vorzugsweise erfolgt die Schmierung des Zubringerantriebs wahlweise sequenziell bzw. zyklisch oder kontinuierlich. Weiter bevorzugt erfolgt die Schmierung gesteuert durch eine mit der Schmierstoff-Versorgungseinheit verbundene Steuerung.

Die Erfindung wird im Folgenden anhand bevorzugter Beispiele unter Bezugnahme auf die beigefügten Figuren beschrieben.
- Figur 1: zeigt eine Füllmaschine gemäß einer ersten bevorzugten Ausführungsform schematisch in einer Seitenansicht;
- Figur 2: zeigt eine Detailansicht der Füllmaschine gemäß Figur 1;
- Figur 3: zeigt eine Füllmaschine gemäß einer zweiten bevorzugten Ausführungsform schematisch in einer Seitenansicht;
- Figur 4: zeigt eine Füllmaschine gemäß einer dritten bevorzugten Ausführungsform schematisch in einer Seitenansicht.

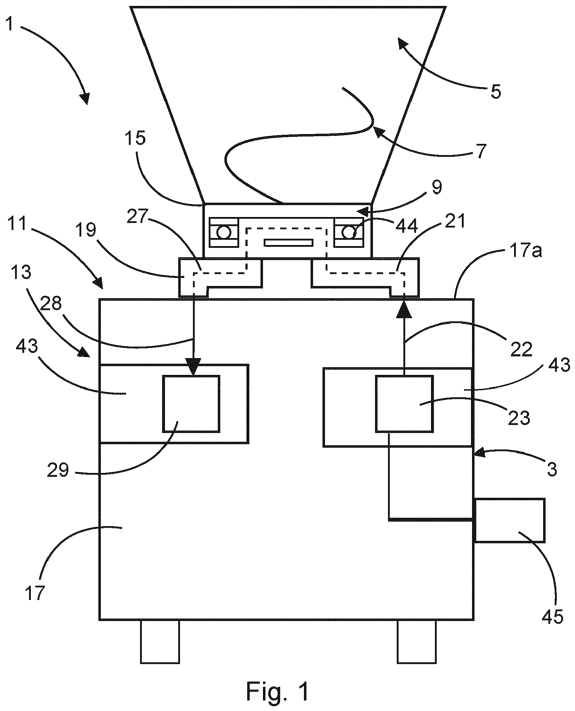

Figur 1 zeigt die Füllmaschine 1 gemäß einer ersten bevorzugten Ausführungsform. Gemäß dieser Ausführungsform ist die Füllmaschine 1 eine Füllmaschine.

Die Füllmaschine 1 umfasst ein Gehäuse 3, einen mit dem Gehäuse 3 verbundenen Trichter 5 zum Aufnehmen von pastösen Massen, insbesondere Lebensmittelprodukten, eine wenigstens teilweise in dem Trichter 5 angeordnete Zubringerkurve 7 und einen Zubringerantrieb 9 zum Antreiben der Zubringerkurve 7. Die Füllmaschine 1 umfasst ferner ein in dem Gehäuse 3 angeordnetes Förderwerk 11 zum Fördern der pastösen Masse. Das Förderwerk 11 ist im Betrieb fluidleitend mit dem Trichter 5 verbunden.

Ferner weist die Füllmaschine 1 eine Schmierstoff-Versorgungseinheit 13 zur Schmierung des Zubringerantriebs 9 auf. Die Schmierstoff-Versorgungseinheit 13 ist dem Gehäuse 3 der Füllmaschine 1 zugeordnet.

Das Gehäuse 3 weist einen ersten Gehäuseteil 15 und einen zweiten Gehäuseteil 17 auf, welche bevorzugt über ein Scharnier 19 schwenkbar miteinander verbunden sind.

Das Förderwerk 11 ist im ersten, vorliegend unteren Gehäuseteil 15 integriert und dessen Position in der gezeigten Ansicht daher nur angedeutet.

Die zu verarbeitende pastöse Masse wird im Betrieb in dem Trichter 5 aufgenommen, durch die Zubringerkurve 7 gefördert und gelangt anschließend in das Förderwerk 11, in welchem die pastöse Masse beispielsweise durch eine Förderkammer gefördert und portioniert abgegeben wird.

Der Trichter 5 ist gemeinsam mit dem ersten Gehäuseteil 15 oberhalb des zweiten Gehäuseteils 17 angeordnet und liegt auf einem oberen Teil 17a des zweiten Gehäuseteils 17 zumindest abschnittsweise auf.

Die Schmierstoff-Versorgungseinheit 13 ist dabei zumindest abschnittsweise in dem Gehäuse 3, nämlich in dem zweiten Gehäuseteil 17, angeordnet.

Die Füllmaschine 1 umfasst ferner einen mit der Schmierstoff-Versorgungseinheit 13 fluidleitend verbundenen Versorgungskanal 21. Durch diesen Versorgungskanal 21 kann in einer Einlaufrichtung 22 von einem Schmierstoffbehälter 23 ein Schmierstoff durch das Scharnier 19 zu dem Zubringerantrieb 9 gefördert werden. Von dem Zubringerantrieb 9 kann der verbrauchte oder überschüssige Schmierstoff durch einen Abführkanal 27 in einer Abführrichtung 28 einem Auffangbehälter 29 der Füllmaschine 1 zugeführt werden.

In dem gezeigten Ausführungsbeispiel sind der Schmierstoffbehälter 23 und der Auffangbehälter 29 dem zweiten Gehäuseteil 17 zugeordnet.

Der Versorgungskanal 21 erstreckt sich von dem zweiten Gehäuseteil 17 zu dem ersten Gehäuseteil 15 und zumindest abschnittsweise durch das Scharnier 19. Bevorzugt wird durch die Leitung des Schmierstoffs durch den Versorgungskanal 21 ebenfalls das Scharnier 19 mit Schmierstoff versorgt. Der Abführkanal 27 erstreckt sich von dem ersten Gehäuseteil 15 und insbesondere dem Zubringerantrieb 9 durch das Scharnier 19 hin zu dem zweiten Gehäuseteil 17.

Der zweite Gehäuseteil 17 weist ein Aufnahmefach 43 zur Aufnahme des Auffangbehälters 29 auf. Ferner weist der zweite Gehäuseteil 17 ein zweites Aufnahmefach 43 zur Aufnahme des Schmierstoffbehälters 23 auf. Bevorzugt sind beide Aufnahmefächer 43 zur Entnahme des Schmierstoffbehälters 23 bzw. Auffangbehälters 29 relativ zu dem zweiten Gehäuseteil 17 bewegbar.

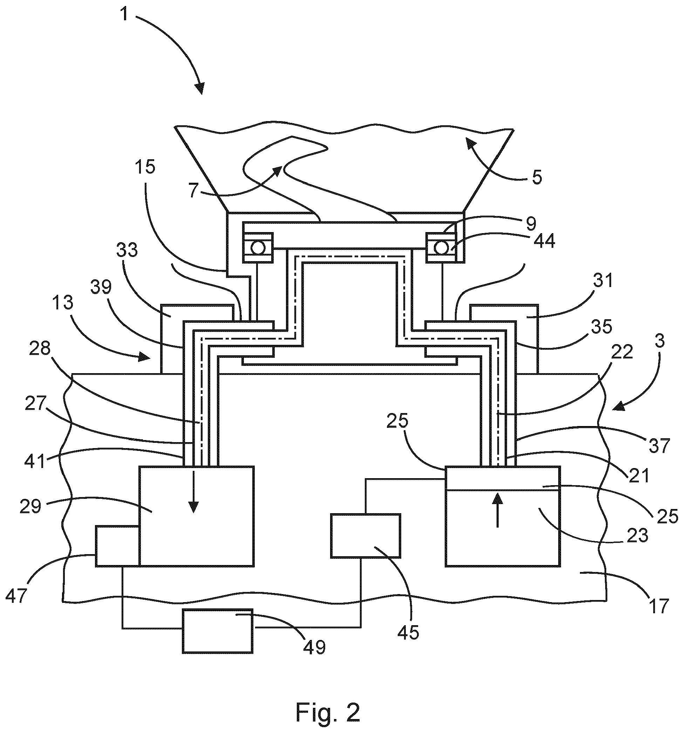

Wie insbesondere die Detailansicht der Füllmaschine 1 gemäß Figur 2 zeigt, weist die Schmierstoff-Versorgungseinheit 13 ferner einen Schmierstoff-Dispenser 25 auf, welcher dazu eingerichtet ist, Schmierstoff von dem Schmierstoffbehälter 23 an den Versorgungskanal 21 abzugeben.

Die Schmierstoff-Versorgungseinheit 13 und insbesondere der Schmierstoff-Dispenser 25 ist mit einer Energiequelle 45 verbunden. Bei der Energiequelle kann es sich bevorzugt um die zentrale Energieversorgung der Füllmaschine handeln.

Das Scharnier 19 weist einen ersten Lagerklotz 31 und einen zweiten Lagerklotz 33 auf, welche mit dem oberen Teil 17a des zweiten Gehäuseteils gekoppelt sind. Das Scharnier 19 ist ferner mit dem ersten Gehäuseteil 15, welches dem Trichter 5 zugeordnet ist, gekoppelt. Der Versorgungskanal 21 erstreckt sich zumindest abschnittsweise durch den ersten Lagerklotz 31 und der Abführkanal 27 erstreckt sich zumindest abschnittsweise durch den zweiten Lagerklotz 33. Somit kann der Versorgungskanal 21 bzw. der Abführkanal 27 durch die vorhandene Anbindung zwischen dem zweiten Gehäuseteil 17 und dem Scharnier 19 geführt werden.

Der erste Lagerklotz 31 weist eine erste Bohrung 35 auf, welche dazu eingerichtet ist, den Zuführkanal 21 zumindest abschnittsweise auszubilden. Der zweite Gehäuseteil 17 weist ferner ein erstes Leitungselement 37 auf, welches korrespondierend zu der Bohrung 35 ausgebildet und dazu eingerichtet ist, den Versorgungskanal 21 zumindest abschnittsweise auszubilden.

Das Leitungselement 37 kann bevorzugt auch zumindest abschnittsweise in dem Lagerklotz 31 aufgenommen sein.

Der zweite Lagerklotz 33 weist eine zweite Bohrung 39 auf und der zweite Gehäuseteil 17 weist ein korrespondierend zu der zweiten Bohrung 39 ausgebildetes zweites Leitungselement 41 auf, welches fluidleitend mit der zweiten Bohrung 39 verbunden ist. Die zweite Bohrung 39 und das zweite Leitungselement 41 bilden zumindest abschnittsweise den Abführkanal 27 aus. Das zweite Leitungselement 41 ist fluidleitend mit dem Auffangbehälter 29 verbunden. Das erste Leitungselement 37 ist fluidleitend mit dem Schmierstoffbehälter 23 und/oder dem Schmierstoff-Dispenser 25 verbunden.

Die Schmierstoff-Versorgungseinheit 13 weist bevorzugt eine als Energiespeicher ausgebildete Energiequelle 45 auf, der dazu eingerichtet ist, eine Energie zum autarken Betrieb der Schmierstoff-Versorgungseinheit 13 bereitzustellen. Alternativ kann die Schmierstoff-Versorgungseinheit 13 eine als dezentrale Energieversorgung ausgebildete Energiequelle 45 zur Stromversorgung aufweisen oder mit der zentralen Energieversorgung der Füllmaschine 1 verbunden sein.

Die Füllmaschine 1 weist ferner eine Sensoreinrichtung 47 zum Detektieren von Schmierstoff auf, welche insbesondere dazu eingerichtet ist, Schmierstoff im Bereich des Zubringerantriebs 9, im Bereich des Förderwerks 11 (vgl. Fig. 1), im Bereich des Versorgungskanals 21 oder des Abführkanals 27, im Bereich des Scharniers 19 bzw. der Lagerklötze 31, 33 zu detektieren. Der Zubringerantrieb 9 weist ein Lager 44 zum Lagern der Zubringerkurve 7 an dem ersten Gehäuseteil 15 auf.

In dem gezeigten Ausführungsbeispiel ist die Sensoreinrichtung 47 dazu eingerichtet, Schmierstoff im Abführkanal 27 zu detektieren. Die Sensoreinrichtung 47 ist signalleitend mit einer Steuerung 49 verbunden. Wahlweise kann die Sensoreinrichtung 47 auch mit dem Energiespeicher 45 verbunden sein, sodass der Energiespeicher 45 die Energie zum Betrieb der Sensoreinrichtung 47 bereitstellt. Bei der Steuerung 49 kann es sich um eine separate Steuerung der Schmierstoff-Versorgungseinheit 13 oder die Steuerung der Füllmaschine 1 handeln.

Die Steuerung 49 ist bevorzugt dazu eingerichtet, den Betrieb der Schmierstoff-Versorgungseinheit 13 zu steuern. Insbesondere ist die Steuerung 49 dazu eingerichtet, den Betrieb des Schmierstoff-Dispensers 25 zu steuern. Bevorzugt steuert die Steuerung 49 den Schmierstoff-Dispenser 25 auf Basis der von der Sensoreinrichtung 47 erfassten Sensorsignale.

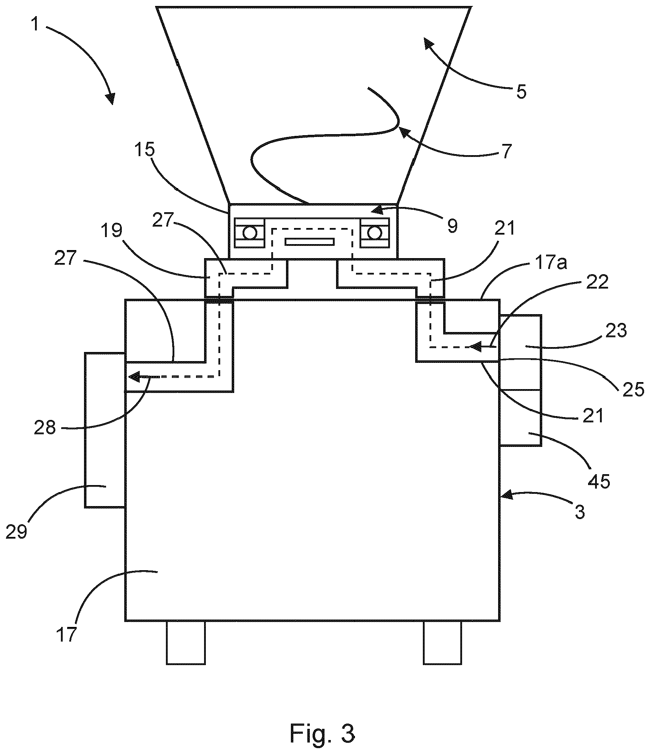

Das in Figur 3 gezeigte Ausführungsbeispiel unterscheidet sich von dem vorstehend in Figur 1 gezeigten Ausführungsbeispiel der Füllmaschine 1 durch die Anordnung und Ausbildung der Schmierstoff-Versorgungseinheit 13. Die Füllmaschine 1 umfasst ein Gehäuse 3, welches in bekannter Weise zweiteilig, mit einem ersten Gehäuseteil 15 und einem zweiten Gehäuseteil 17 ausgebildet ist. Hinsichtlich gleicher Bauteile sind gleiche Bezugszeichen verwendet und es wird auf die vorherigen Beschreibungen der Figuren 1 und 2 Bezug genommen.

Die Schmierstoff-Versorgungseinheit 13 umfasst einen Schmierstoffbehälter 23, aus welchem mittels eines Versorgungskanals 21 in einer Einlaufrichtung 22 Schmierstoff durch ein Scharnier 19 zu einem Zubringerantrieb 9 gefördert werden kann. Von dem Zubringerantrieb 9, welcher in dem ersten Gehäuseteil 15 angeordnet ist, wird der verbrauchte bzw. ungenutzte Schmierstoff durch das Scharnier 19 über einen Abführkanal 27 in einer Ablaufrichtung 28 hin zu einem Auffangbehälter 29 gefördert. Der Auffangbehälter 29 ist dem zweiten Gehäuseteil 17 zugeordnet und außen an dem Gehäuse 3 befestigt.

Die Schmierstoff-Versorgungseinheit 13 weist einen Schmierstoff-Dispenser 25 auf, welcher dazu eingerichtet ist, Schmierstoff von dem Schmierstoffbehälter 23 an den Versorgungskanal 21 abzugeben.

Der zweite Gehäuseteil 17 weist in bekannter Weise ein fluidleitend mit dem Scharnier 19 verbundenes erstes Leitungselement 37 auf, welches dazu eingerichtet ist, zumindest einen Abschnitt des Versorgungskanals 21 auszubilden (vgl. Fig. 2). Ferner ist in dem Gehäuse 3 ein zweites Leitungselement 41 vorgesehen, welches fluidleitend mit dem Scharnier 19 verbunden und dazu eingerichtet ist, den Abführkanal 27 zumindest abschnittsweise auszubilden (vgl. Fig. 2). Das zweite Leitungselement 41 ist fluidleitend mit dem Auffangbehälter 29 verbunden und das erste Leitungselement 37 ist fluidleitend mit dem Schmierstoffbehälter 23 verbunden (vgl. Fig. 2). Ferner ist eine als Energiespeicher ausgebildete Energiequelle 45 zum Betreiben der Schmierstoff-Versorgungseinheit 13 vorgesehen, welche ebenfalls an dem zweiten Gehäuseteil 17 angeordnet ist.

Bei den Leitungselementen 37, 41 kann es sich beispielsweise um Rohre oder flexible Schläuche handeln.

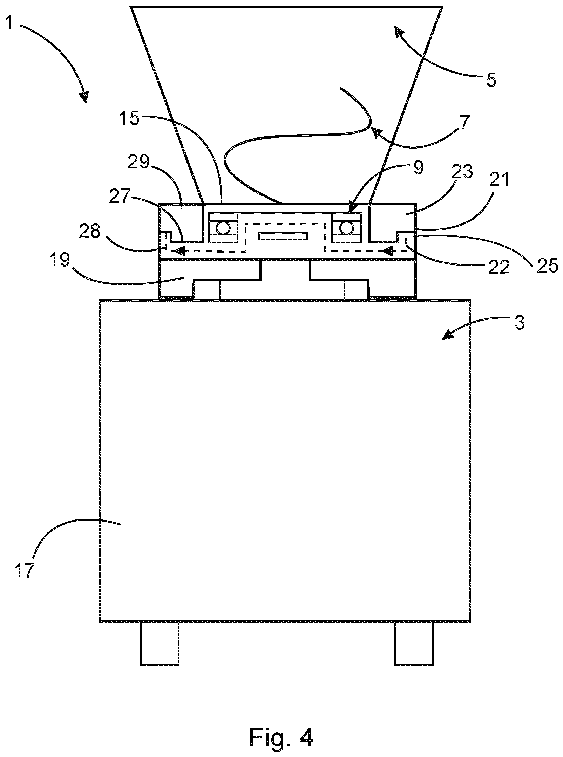

In dem in Figur 4 gezeigten Ausführungsbeispiel der Füllmaschine 1 ist das Gehäuse 3 in bekannter Weise zweiteilig mit einem ersten Gehäuseteil 15 und einem zweiten Gehäuseteil 17 ausgebildet und die Schmierstoff-Versorgungseinheit 13 dem ersten Gehäuseteil 15 zugeordnet. Hinsichtlich gleicher Bauteile sind gleiche Bezugszeichen verwendet und es wird auf die vorherigen Beschreibungen der Figuren 1 bis 3 Bezug genommen. Der erste Gehäuseteil 15 ist in bekannter Weise mittels eines Scharniers 19 mit dem zweiten Gehäuseteil 17 schwenkbar verbunden. Im geschlossenen Zustand des Gehäuses 3 ist der dem ersten Gehäuseteil 15 zugeordnete Trichter 5 fluidleitend mit dem im Gehäuse 3 integrierten Förderwerk (nicht gezeigt) verbunden.

Die Schmierstoff-Versorgungseinheit 13 umfasst in bekannter Weise einen Versorgungskanal 21, welcher fluidleitend mit einem Schmierstoffbehälter 23 verbunden ist. Der Schmierstoff-Versorgungskanal 21 erstreckt sich zumindest abschnittsweise durch den ersten Gehäuseteil 15 und ist dazu eingerichtet, Schmierstoff in einer Einlaufrichtung 22 dem Zubringerantrieb 9 zuzuführen. Der Schmierstoffbehälter 23 ist dem ersten Gehäuseteil 15 zugeordnet und mit diesem verbunden.

Die Schmierstoff-Versorgungseinheit 13 umfasst ferner einen Abführkanal 27 und einen fluidleitend mit dem Abführkanal 27 verbundenen Auffangbehälter 29. Der Abführkanal 27 ist dazu eingerichtet, überschüssigen oder verbrauchten Schmierstoff von dem Zubringerantrieb 9 in einer Ablaufrichtung 28 abzuleiten und zu dem Auffangbehälter 29 zu fördern. Bevorzugt weist die Schmierstoff-Versorgungseinheit 13 weitere Komponenten, insbesondere einen Energiespeicher (nicht gezeigt) auf, welcher insbesondere dem ersten Gehäuseteil 15 zugeordnet ist, um einen autarken Betrieb der Schmierstoff-Versorgungseinheit 13 zu ermöglichen.

Bevorzugt ist der Versorgungskanal 21 ferner dazu eingerichtet, Schmierstoff zu dem Scharnier 19 zur Schmierung desselbigen hinzuleiten und der Abführkanal 27 dazu eingerichtet, das überschüssige Schmierstoff aus dem Scharnier 19 abzuleiten.

Weitere Komponenten, wie insbesondere eine Sensoreinrichtung, eine Steuerung oder ein Schmierstoff-Dispenser 25 können, wie bereits in Figur 2 in Bezug auf das erste Ausführungsbeispiel der Füllmaschine 1 im Detail gezeigt, vorhanden sein und sind vorzugsweise dem ersten Gehäuseteil 15 zugeordnet. Alternativ können insbesondere die Sensoreinrichtung und die Steuerung dem zweiten Gehäuseteil 17 zugeordnet sein und mittels einer drahtlosen und/oder drahtgebundenen signalleitenden Verbindung mit der Schmierstoff-Versorgungseinheit 13 verbunden sein.

Die Erfindung wird ferner beschrieben anhand der nachfolgenden Ausführungsbeispiele, worin:
1. Ausführungsbeispiel Füllmaschine (1), umfassend:
   - ein Gehäuse (3);
   - einen mit dem Gehäuse (3) verbundenen Trichter (5) zum Aufnehmen von pastösen Massen, insbesondere Lebensmittelprodukten, mit einer wenigstens teilweise in dem Trichter (5) angeordneten Zubringerkurve (7) und einem Zubringerantrieb (9) zum Antreiben der Zubringerkurve (7); und
   - ein in dem Gehäuse (3) angeordnetes Förderwerk (11) zum Fördern der pastösen Masse, welche im Betrieb fluidleitend mit dem Trichter (5) verbunden ist,
   dadurch gekennzeichnet, dass die Füllmaschine (1) ferner eine Schmierstoff-Versorgungseinheit (13) zur Schmierung des Zubringerantriebs (9) aufweist, welche dem Gehäuse (3) der Füllmaschine (1) und/oder dem Trichter (5) zugeordnet ist.
2. Ausführungsbeispiel Füllmaschine (1) nach Ausführungsbeispiel 1,
   wobei die die Schmierstoff-Versorgungseinheit (13) dem Gehäuse (3) derart zugeordnet ist, dass die Schmierstoff-Versorgungseinheit (13) mit dem Gehäuse (3) einen geschlossenen Schmierstoffkreislauf ausbildet.
3. Ausführungsbeispiel Füllmaschine (1) nach Ausführungsbeispiel 1 oder 2,
   wobei das Gehäuse (3) einen ersten Gehäuseteil (15), einen zweiten Gehäuseteil (17) und ein Scharnier (19) zum schwenkbaren Verbinden des ersten Gehäuseteils (15) mit dem zweiten Gehäuseteil (17) in einem geschlossenen Zustand aufweist, und
   wobei die Schmierstoff-Versorgungseinheit (13) dem ersten Gehäuseteil (15) und/oder dem zweiten Gehäuseteil (17) zugeordnet ist.
4. Ausführungsbeispiel Füllmaschine (1) nach einem er vorstehenden Ausführungsbeispiele,
   wobei die Schmierstoff-Versorgungseinheit (13) zumindest abschnittsweise in dem Gehäuse (3) angeordnet ist.
5. Ausführungsbeispiel Füllmaschine (1) nach einem der vorstehenden Ausführungsbeispiele, ferner umfassend:
   - einen mit der Schmierstoff-Versorgungseinheit (13) fluidleitend verbundenen Versorgungskanal (21),
      wobei sich der Versorgungskanal (21) vorzugsweise zumindest abschnittweise durch das Gehäuse (3), insbesondere durch den ersten Gehäuseteil (15) und/oder den zweiten Gehäuseteil (17), erstreckt und dazu eingerichtet ist, Schmierstoff von der Schmierstoff-Versorgungseinheit (13) zu dem Zubringerantrieb (9) zu leiten.
6. Ausführungsbeispiel Füllmaschine (1) nach Ausführungsbeispiel 5, ferner umfassend:
   - einen Schmierstoffbehälter (23) zum Bereitstellen von Schmierstoff, und
   - einen mit dem Schmierstoffbehälter (23) fluidleitend verbundenen Schmierstoff-Dispenser (25) zum Abgeben von Schmierstoff in den Versorgungskanal (21).
7. Ausführungsbeispiel Füllmaschine (1) nach einem der vorstehenden Ausführungsbeispiele,
   ferner umfassend:
   einen mit dem Zubringerantrieb (9) fluidleitend verbundenen Abführkanal (27), und einen mit dem Abführkanal (27) fluidleitend verbundenen Auffangbehälter (29),
   wobei sich der Abführkanal (27) zumindest abschnittweise durch das Gehäuse (3), insbesondere durch den ersten Gehäuseteil (15), erstreckt und dazu eingerichtet ist, Schmierstoff von dem Zubringerantrieb (9) abzuführen und zu dem Auffangbehälter (29) zu leiten.
8. Ausführungsbeispiel Füllmaschine (1) nach Ausführungsbeispiel 7,
   wobei der Auffangbehälter (29) dem zweiten Gehäuseteil (17) zugeordnet und zumindest abschnittsweise in dem zweiten Gehäuseteil (17) angeordnet ist.
9. Ausführungsbeispiel Füllmaschine (1) nach einem der Ausführungsbeispiele 6 bis 8,
   wobei der Schmierstoff-Dispenser (25) eine Schmierstoffpumpe zum Bereitstellen und Fördern von Schmierstoff durch den Versorgungskanal (21) zu dem Zubringerantrieb (9) ist, und der Schmierstoffbehälter (23) und die Schmierstoffpumpe vorzugsweise zumindest abschnittsweise in dem zweiten Gehäuseteil (17) angeordnet sind.
10. Ausführungsbeispiel Füllmaschine (1) einem der Ausführungsbeispiele 5 bis 9,
   wobei sich der Versorgungskanal (21) und/oder der Abführkanal (27) zumindest abschnittweise durch das Scharnier (19) erstrecken.
11. Ausführungsbeispiel Füllmaschine (1) nach Ausführungsbeispiel 10,
   wobei das Scharnier (19) einen ersten Lagerklotz (31) und einen zweiten Lagerklotz (33) aufweist,
   wobei sich der Versorgungskanal (21) zumindest abschnittsweise durch den ersten Lagerklotz (31) erstreckt und/oder sich der Abführkanal (27) zumindest abschnittsweise durch den zweiten Lagerklotz (33) erstreckt.
12. Ausführungsbeispiel Füllmaschine (1) nach Ausführungsbeispiel 11,
   wobei der erste Lagerklotz (31) eine erste Bohrung (35) aufweist und der zweite Gehäuseteil ein mit der ersten Bohrung (35) korrespondierendes erstes Leitungselement (37) aufweist, welches fluiddicht mit dem ersten Lagerklotz (31) verbunden ist, und der Versorgungskanal (21) abschnittsweise durch die erste Bohrung (35) und das erste Leitungselement definiert wird,
   wobei der zweite Lagerklotz (33) eine zweite Bohrung (39) aufweist und der zweite Gehäuseteil (17) ein mit der zweiten Bohrung (39) korrespondierendes zweites Leitungselement (41) aufweist, welches fluiddicht mit dem zweiten Lagerklotz (33) verbunden ist, und der Abführkanal (27) abschnittsweise durch die zweite Bohrung (39) und das zweite Leitungselement (41) definiert wird.
13. Ausführungsbeispiel Füllmaschine (1) nach einem der Ausführungsbeispiele 6 bis 12,
   wobei der zweite Gehäuseteil (17) ein Aufnahmefach (43) und/oder einen Aufnahmebehälter zur Aufnahme des Schmierstoffbehälters (23) aufweist, welches eine Zugangsöffnung zur Entnahme des Schmierstoffbehälters (23) aufweist und/ oder zur Entnahme des Schmierstoffbehälters (23) relativ zu dem zweiten Gehäuseteil (17) bewegbar ist.
14. Ausführungsbeispiel Füllmaschine (1) nach einem der Ausführungsbeispiele 3 bis 13,
   wobei die Schmierstoff-Versorgungseinheit (13) in dem ersten Gehäuseteil (15) angeordnet ist und einen Schmierstoffbehälter (23) und einen Energiespeicher (45) aufweist, wobei der Energiespeicher (45) dazu eingerichtet ist, eine Energie zum autarken Betrieb der Schmierstoff-Versorgungseinheit (13), insbesondere zum Fördern des Schmierstoffes von dem Schmierstoffbehälter (23) durch den Versorgungskanal (21), bereitzustellen.
15. Ausführungsbeispiel Füllmaschine (1) nach Ausführungsbeispiel 14,
   wobei die Schmierstoff-Versorgungseinheit (13) eine austauschbare Schmierstoffkartusche ist, und der Energiespeicher (45) ein elektrochemischer Energiespeicher ist, vorzugsweise eine Batterie oder ein Akkumulator.
16. Ausführungsbeispiel Füllmaschine (1) nach Ausführungsbeispiel 14,
   wobei der Energiespeicher (45) ein chemischer Energiespeicher ist und dazu eingerichtet ist, mittels einer chemischen Reaktion einen Gasdruck zum Betreiben der Schmierstoffkartusche bereitzustellen.
17. Ausführungsbeispiel Füllmaschine (1) nach einem der Ausführungsbeispiele 7 bis 16,
   wobei der zweite Gehäuseteil ein Aufnahmefach (43) zur Aufnahme des Auffangbehälters (29) aufweist, welches eine Zugangsöffnung zur Entnahme des Auffangbehälters (29) aufweist und/ oder zur Entnahme des Auffangbehälters (29) relativ zu dem zweiten Gehäuseteil (17) bewegbar ist.
18. Ausführungsbeispiel Füllmaschine (1) nach einem der Ausführungsbeispiele 3 bis 17,
   wobei die Schmierstoff-Versorgungseinheit (13) fluidleitend mit dem Scharnier (19) verbunden und ferner zur Schmierung des Scharniers (19) eingerichtet ist.
19. Ausführungsbeispiel Füllmaschine (1) nach einem der vorstehenden Ausführungsbeispiele, mit einer Sensoreinrichtung (47) zum Detektieren von Schmierstoff in mindestens einem Bereich, welcher einem der folgenden zugeordnet ist:
   - Zubringerantrieb (9);
   - Förderwerk (11);
   - Versorgungskanal (21);
   - Abführkanal (27);
   - Scharnier (19);
   - Auffangbehälter; oder
   - Lagerklotz (31, 33).
20. Ausführungsbeispiel Füllmaschine (1) nach einem der vorstehenden Ausführungsbeispiele, ferner umfassend:
   - eine Steuerung (49), die mit der Schmierstoff-Versorgungseinheit (13) und/oder der Sensoreinrichtung (47) signalleitend verbunden ist.
21. Ausführungsbeispiel Füllmaschine (1) nach dem Oberbegriff von Ausführungsbeispiel 1,
   ferner umfassend:
   - eine Schnittstelle zur fluidleitenden Verbindung mit einer externen Schmierstoff-Versorgungseinheit zur Schmierung des Zubringerantriebs (9),
   gekennzeichnet durch einen mit dem Zubringerantrieb (9) fluidleitend verbundenen Abführkanal (27) zum Abführen von Schmierstoff von dem Zubringerantrieb (9) und einen mit dem Abführkanal (27) fluidleitend verbundenen Auffangbehälter (29) zum Auffangen des Schmierstoffs,
   wobei der Auffangbehälter (29) zumindest abschnittweise in dem Gehäuse (3) angeordnet ist.
22. Ausführungsbeispiel Verfahren zum Betrieb einer Füllmaschine (1) mit einem Gehäuse (3) und einer Schmierstoff-Versorgungseinheit (13), insbesondere einer Füllmaschine (1) nach einem der Ausführungsbeispiele 1 bis 21, umfassend die Schritte:
   - Betätigen einer dem Gehäuse (3) zugeordneten Schmierstoff-Versorgungseinheit (13),
   - Betreiben der Füllmaschine (1) unter gleichzeitiger Schmierung eines im Gehäuse (3) angeordneten Zubringerantriebs (9) durch die Schmierstoff-Versorgungseinheit (13).
23. Ausführungsbeispiel Verfahren nach Ausführungsbeispiel 22,
   wobei die Schmierung des Zubringerantriebs (9) wahlweise zyklisch oder kontinuierlich erfolgt.

### Bezugszeichenliste

- 1: Füllmaschine
- 3: Gehäuse
- 5: Trichter
- 7: Zubringerkurve
- 9: Zubringerantrieb
- 11: Förderwerk
- 13: Schmierstoff-Versorgungseinheit
- 15: erster Gehäuseteil
- 17a: oberer Teil des zweiten Gehäuseteils
- 17: zweiter Gehäuseteil
- 19: Scharnier
- 21: Versorgungskanal
- 22: Einlaufrichtung
- 23: Schmierstoffbehälter
- 25: Schmierstoff-Dispenser
- 27: Abführkanal
- 28: Ablaufrichtung
- 29: Auffangbehälter
- 31: erster Lagerklotz
- 33: zweiter Lagerklotz
- 35: erste Bohrung
- 37: erstes Leitungselement
- 39: zweite Bohrung
- 41: zweites Leitungselement
- 43: Aufnahmefach, Aufnahmebehälter
- 44: Lager
- 45: Energiequelle
- 47: Sensoreinrichtung
- 49: Steuerung

## Patentansprüche

1. Füllmaschine (1), umfassend:
- ein Gehäuse (3);
- einen mit dem Gehäuse (3) verbundenen Trichter (5) zum Aufnehmen von pastösen Massen, insbesondere Lebensmittelprodukten, mit einer wenigstens teilweise in dem Trichter (5) angeordneten Zubringerkurve (7) und einem Zubringerantrieb (9) zum Antreiben der Zubringerkurve (7); und
- ein in dem Gehäuse (3) angeordnetes Förderwerk (11) zum Fördern der pastösen Masse, welche im Betrieb fluidleitend mit dem Trichter (5) verbunden ist,
**dadurch gekennzeichnet, dass** die Füllmaschine (1) ferner eine Schmierstoff-Versorgungseinheit (13) zur Schmierung des Zubringerantriebs (9) aufweist, welche dem Gehäuse (3) der Füllmaschine (1) und/oder dem Trichter (5) zugeordnet ist.

2. Füllmaschine (1) nach Anspruch 1,
wobei die die Schmierstoff-Versorgungseinheit (13) dem Gehäuse (3) derart zugeordnet ist, dass die Schmierstoff-Versorgungseinheit (13) mit dem Gehäuse (3) einen geschlossenen Schmierstoffkreislauf ausbildet, und/oder
wobei die Schmierstoff-Versorgungseinheit (13) zumindest abschnittsweise in dem Gehäuse (3) angeordnet ist, und sich insbesondere zumindest abschnittweise durch ein Scharnier (19) erstreckt.

3. Füllmaschine (1) nach Anspruch 1 oder 2,
wobei das Gehäuse (3) einen ersten Gehäuseteil (15), einen zweiten Gehäuseteil (17) und ein bzw. das Scharnier (19) zum schwenkbaren Verbinden des ersten Gehäuseteils (15) mit dem zweiten Gehäuseteil (17) in einem geschlossenen Zustand aufweist, und
wobei die Schmierstoff-Versorgungseinheit (13) dem ersten Gehäuseteil (15) und/oder dem zweiten Gehäuseteil (17) zugeordnet ist, und
wobei die Schmierstoff-Versorgungseinheit (13) vorzugsweise fluidleitend mit dem Scharnier (19) verbunden und ferner zur Schmierung des Scharniers (19) eingerichtet ist.

4. Füllmaschine (1) nach einem der vorstehenden Ansprüche, ferner umfassend:
- einen mit der Schmierstoff-Versorgungseinheit (13) fluidleitend verbundenen Versorgungskanal (21),
wobei sich der Versorgungskanal (21) vorzugsweise zumindest abschnittweise durch das Gehäuse (3), insbesondere durch den ersten Gehäuseteil (15) und/oder den zweiten Gehäuseteil (17), erstreckt und dazu eingerichtet ist, Schmierstoff von der Schmierstoff-Versorgungseinheit (13) zu dem Zubringerantrieb (9) zu leiten.

5. Füllmaschine (1) nach einem der vorstehenden Ansprüche, ferner umfassend:
- einen Schmierstoffbehälter (23) zum Bereitstellen von Schmierstoff, und
- einen mit dem Schmierstoffbehälter (23) fluidleitend verbundenen Schmierstoff-Dispenser (25) zum Abgeben von Schmierstoff in den Versorgungskanal (21), und/oder
einen mit dem Zubringerantrieb (9) fluidleitend verbundenen Abführkanal (27), und einen mit dem Abführkanal (27) fluidleitend verbundenen Auffangbehälter (29),
wobei sich der Abführkanal (27) zumindest abschnittweise durch das Gehäuse (3), insbesondere durch den ersten Gehäuseteil (15), erstreckt und dazu eingerichtet ist, Schmierstoff von dem Zubringerantrieb (9) abzuführen und zu dem Auffangbehälter (29) zu leiten, und/oder
wobei sich der Versorgungskanal (21) und/oder der Abführkanal (27) zumindest abschnittweise durch das Scharnier (19) erstrecken.

6. Füllmaschine (1) nach Anspruch 5,
wobei der Auffangbehälter (29) dem zweiten Gehäuseteil (17) zugeordnet und zumindest abschnittsweise in dem zweiten Gehäuseteil (17) angeordnet ist.

7. Füllmaschine (1) nach einem der Ansprüche 5 oder 6,
wobei der Schmierstoff-Dispenser (25) eine Schmierstoffpumpe zum Bereitstellen und Fördern von Schmierstoff durch den Versorgungskanal (21) zu dem Zubringerantrieb (9) ist, und der Schmierstoffbehälter (23) und die Schmierstoffpumpe vorzugsweise zumindest abschnittsweise in dem zweiten Gehäuseteil (17) angeordnet sind.

8. Füllmaschine (1) nach Anspruch 7,
wobei das Scharnier (19) einen ersten Lagerklotz (31) und einen zweiten Lagerklotz (33) aufweist,
wobei sich der Versorgungskanal (21) zumindest abschnittsweise durch den ersten Lagerklotz (31) erstreckt und/oder sich der Abführkanal (27) zumindest abschnittsweise durch den zweiten Lagerklotz (33) erstreckt.

9. Füllmaschine (1) nach Anspruch 8,
wobei der erste Lagerklotz (31) eine erste Bohrung (35) aufweist und der zweite Gehäuseteil ein mit der ersten Bohrung (35) korrespondierendes erstes Leitungselement (37) aufweist, welches fluiddicht mit dem ersten Lagerklotz (31) verbunden ist, und der Versorgungskanal (21) abschnittsweise durch die erste Bohrung (35) und das erste Leitungselement definiert wird,
wobei der zweite Lagerklotz (33) eine zweite Bohrung (39) aufweist und der zweite Gehäuseteil (17) ein mit der zweiten Bohrung (39) korrespondierendes zweites Leitungselement (41) aufweist, welches fluiddicht mit dem zweiten Lagerklotz (33) verbunden ist, und der Abführkanal (27) abschnittsweise durch die zweite Bohrung (39) und das zweite Leitungselement (41) definiert wird.

10. Füllmaschine (1) nach einem der Ansprüche 5 bis 9,
wobei der zweite Gehäuseteil (17) ein Aufnahmefach (43) und/oder einen Aufnahmebehälter zur Aufnahme des Schmierstoffbehälters (23) aufweist, welches eine Zugangsöffnung zur Entnahme des Schmierstoffbehälters (23) aufweist und/ oder zur Entnahme des Schmierstoffbehälters (23) relativ zu dem zweiten Gehäuseteil (17) bewegbar ist.

11. Füllmaschine (1) nach einem der Ansprüche 3 bis 10,
wobei die Schmierstoff-Versorgungseinheit (13) in dem ersten Gehäuseteil (15) angeordnet ist und einen Schmierstoffbehälter (23) und einen Energiespeicher (45) aufweist, wobei der Energiespeicher (45) dazu eingerichtet ist, eine Energie zum autarken Betrieb der Schmierstoff-Versorgungseinheit (13), insbesondere zum Fördern des Schmierstoffes von dem Schmierstoffbehälter (23) durch den Versorgungskanal (21), bereitzustellen,
wobei die Schmierstoff-Versorgungseinheit (13) vorzugsweise eine austauschbare Schmierstoffkartusche ist, und der Energiespeicher (45) ein elektrochemischer Energiespeicher ist, vorzugsweise eine Batterie oder ein Akkumulator, oder
wobei der Energiespeicher (45) vorzugsweise ein chemischer Energiespeicher ist und dazu eingerichtet ist, mittels einer chemischen Reaktion einen Gasdruck zum Betreiben der Schmierstoffkartusche bereitzustellen.

12. Füllmaschine (1) nach einem der Ansprüche 5 bis 11,
wobei der zweite Gehäuseteil ein Aufnahmefach (43) zur Aufnahme des Auffangbehälters (29) aufweist, welches eine Zugangsöffnung zur Entnahme des Auffangbehälters (29) aufweist und/ oder zur Entnahme des Auffangbehälters (29) relativ zu dem zweiten Gehäuseteil (17) bewegbar ist.

13. Füllmaschine (1) nach einem der vorstehenden Ansprüche, mit einer Sensoreinrichtung (47) zum Detektieren von Schmierstoff in mindestens einem Bereich, welcher einem der folgenden zugeordnet ist:
- Zubringerantrieb (9);
- Förderwerk (11);
- Versorgungskanal (21);
- Abführkanal (27);
- Scharnier (19);
- Auffangbehälter; oder
- Lagerklotz (31, 33)
vorzugsweise ferner umfassend:
- eine Steuerung (49), die mit der Schmierstoff-Versorgungseinheit (13) und/oder der Sensoreinrichtung (47) signalleitend verbunden ist.

14. Füllmaschine (1) nach dem Oberbegriff von Anspruch 1,
ferner umfassend:
- eine Schnittstelle zur fluidleitenden Verbindung mit einer externen Schmierstoff-Versorgungseinheit zur Schmierung des Zubringerantriebs (9), **gekennzeichnet durch** einen mit dem Zubringerantrieb (9) fluidleitend verbundenen Abführkanal (27) zum Abführen von Schmierstoff von dem Zubringerantrieb (9) und einen mit dem Abführkanal (27) fluidleitend verbundenen Auffangbehälter (29) zum Auffangen des Schmierstoffs, wobei der Auffangbehälter (29) zumindest abschnittweise in dem Gehäuse (3) angeordnet ist.

15. Verfahren zum Betrieb einer Füllmaschine (1) mit einem Gehäuse (3) und einer Schmierstoff-Versorgungseinheit (13), insbesondere einer Füllmaschine (1) nach einem der Ansprüche 1 bis 14, umfassend die Schritte:
- Betätigen einer dem Gehäuse (3) zugeordneten Schmierstoff-Versorgungseinheit (13),
- Betreiben der Füllmaschine (1) unter gleichzeitiger Schmierung eines im Gehäuse (3) angeordneten Zubringerantriebs (9) durch die Schmierstoff-Versorgungseinheit (13), wobei die Schmierung des Zubringerantriebs (9) vorzugsweise zyklisch oder kontinuierlich erfolgt.
